(19) Europäisches Patentamt
European Patent Office
Office européen des brevets

(11) **EP 2 905 653 A1**

(12) **EUROPEAN PATENT APPLICATION**
published in accordance with Art. 153(4) EPC

(43) Date of publication:
**12.08.2015 Bulletin 2015/33**

(21) Application number: **13843489.9**

(22) Date of filing: **03.10.2013**

(51) Int Cl.:
***G02F 1/167*** *(2006.01)*

(86) International application number:
**PCT/JP2013/005913**

(87) International publication number:
**WO 2014/054291 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.10.2012 JP 2012222242**

(71) Applicant: **Toppan Printing Co., Ltd.**
**Tokyo 110-0016 (JP)**

(72) Inventors:
- **KITAZAWA, Kazushige**
  **Tokyo 110-0016 (JP)**
- **EMORI, Akira**
  **Tokyo 110-0016 (JP)**
- **KINOSITA, Kayo**
  **Tokyo 110-0016 (JP)**

(74) Representative: **Cabinet Plasseraud**
**52, rue de la Victoire**
**75440 Paris Cedex 09 (FR)**

(54) **REFLECTIVE-TYPE COLOR DISPLAY**

(57) A reflective display includes a substrate, a plurality of pixel electrodes mounted on the substrate, a reflective display layer mounted on the plurality of pixel electrodes, an electrode mounted on the reflective display layer, an ink fixing layer mounted on the electrode, and a color filter layer mounted on the ink fixing layer and having a plurality of pixels. Each of the pixels includes a first subpixel, a second subpixel, and a transparent third subpixel. The first subpixel includes a colored portion showing a first color. The second subpixel includes a colored portion showing a second color. The second color is complementary to the first color. When an area of the colored portion in the first subpixel is set to 1.0, an area of the colored portion in the second subpixel is set to be within a range from 0.2 to 1.0 inclusive, and an area of the third subpixel is set to be within a range from 0.5 to 8.0 inclusive.

FIG. 2A

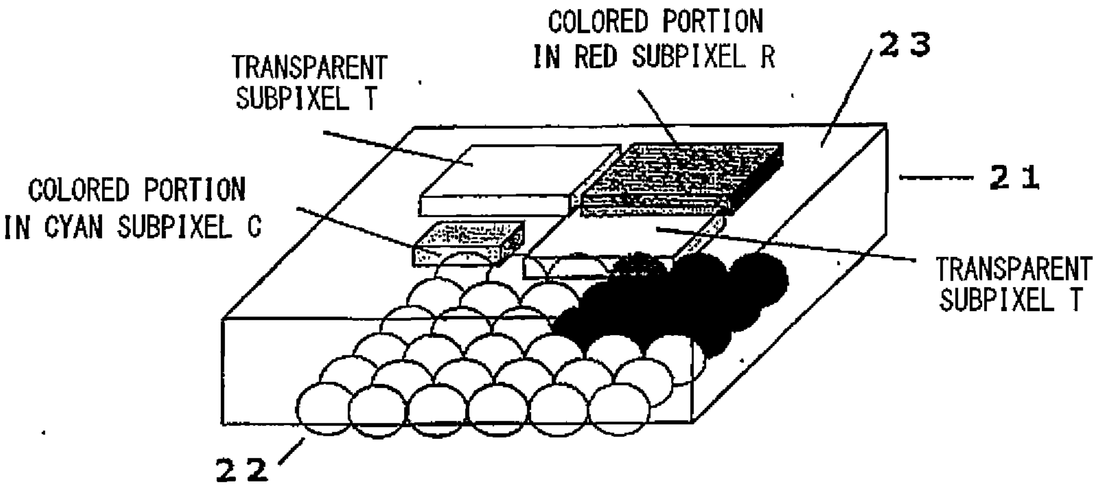


EP 2 905 653 A1

FIG. 2B

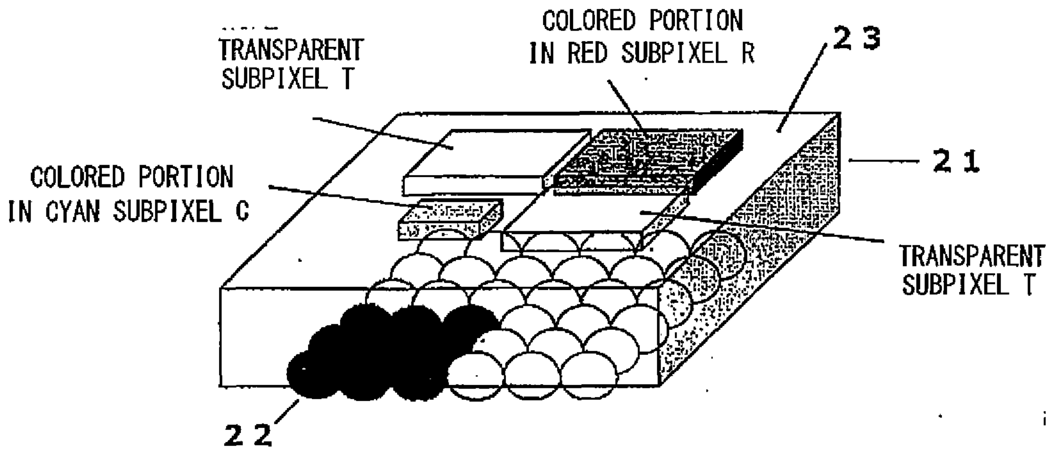
TRANSPARENT
SUBPIXEL T
COLORED PORTION
IN RED SUBPIXEL R
23
21
COLORED PORTION
IN CYAN SUBPIXEL C
TRANSPARENT
SUBPIXEL T
22

FIG. 2C

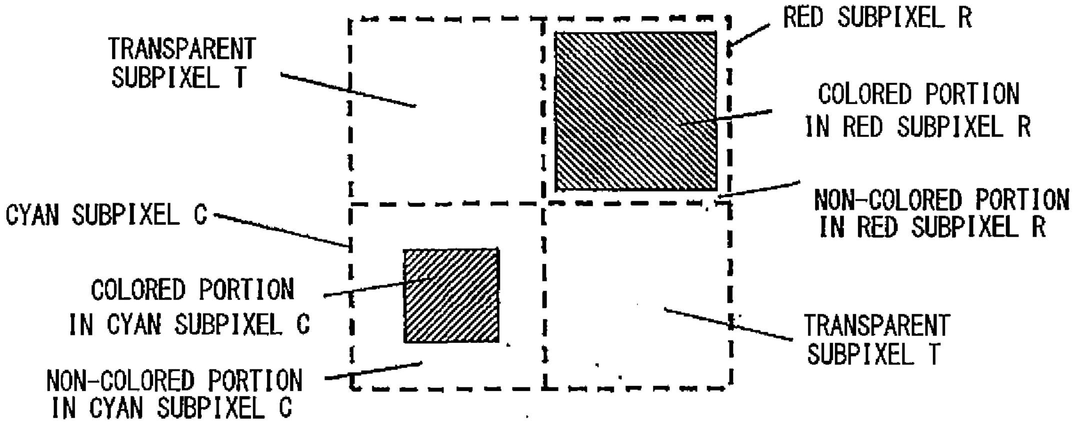
RED SUBPIXEL R
TRANSPARENT
SUBPIXEL T
COLORED PORTION
IN RED SUBPIXEL R
NON-COLORED PORTION
IN RED SUBPIXEL R
CYAN SUBPIXEL C
COLORED PORTION
IN CYAN SUBPIXEL C
TRANSPARENT
SUBPIXEL T
NON-COLORED PORTION
IN CYAN SUBPIXEL C

## Description

### Technical Field

The present invention relates to color reflective displays, and more particularly to color reflective displays equipped with an electrophoretic display device.

### Background

Recently, liquid crystal display panels using a backlight have been mainstream as image display panels. Because these liquid crystal panels cause a large burden on the viewer's eyes, they are not suitable for long-term use.
There are proposed reflective display panels equipped with an electrophoretic display layer located between a pair of electrodes, each of which imposes a smaller burden on the viewer's eyes. Such an electrophoretic display panel is designed to display characters and/or images using reflected light in the same manner as printed paper. For this reason, such an electrophoretic display panel produces a small burden on the viewer to viewer's eyes, and therefore is suitable for work that needs the viewer to view the panel for long period.
Now, most of electrophoretic display panels are constructionally configured to display two colors, which are principally white and black. There are proposed displays each equipped with a color filter, which is composed of primary-colored pixels, such as red, green, and blue colored pixels; the color filter is mounted on an electrophoretic display layer thereof. One example of these displays is disclosed in patent document 1.
Reflective displays, typified by electrophoretic display panels, are designed to perform display operations using external light, so they have limited luminance (brightness) of the panels. Particularly, let us consider a multicolor reflective display comprised of a color filter having red, green, and blue colored portions; the colored portions are provided for each of pixels of the multicolor reflective display. This multicolor reflective display may have pronounced reduction in luminance due to the color filter.
There are some uses of multicolor displays, where it is sufficient to display a total of three colors: white, black, and another color rather than full-color displays. Forming a colored layer having a desired hue on a part of each pixel makes it possible to principally display the three colors, i.e. white, black, and the desired color.
An example of methods of driving three-color reflective displays having a colored layer provided at a part of each pixel is designed to form

(1) Non-reflective portions, i.e. black color portions, so that the corresponding colored layers are non-displayed when showing white
(2) Non-displayed portions corresponding to all the pixels when showing black
(3) Reflective portion, i.e. white colored portions, so that the corresponding colored layers display a desired color when showing the desired color.

However, an electrophoretic display panel having such a monochromatic color filter formed cannot completely shield reflected light despite not setting the colored layers to be non-displayed portions. This may cause displayed white to have a slight hue of the colored layers. As a result, the displayed white and the displayed desired-color may be perceived as a similar-color, deteriorating the contrast of the displayed desired color. This may result in the display panel having poor visibility.

### Citation List

### Patent Literature

Patent literature 1: Japanese Patent Laid-Open No. 2003-161964

### Summary

### Technical Problem

In order to consider these circumstances, the present invention aims to provide displays which are capable of displaying three colors composed of a higher luminance (bright) color and clear white and black.

## Solution to Problem

A reflective display includes a substrate, a plurality of pixel electrodes mounted on the substrate, a reflective display layer mounted on the plurality of pixel electrodes, an electrode mounted on the reflective display layer, an ink fixing layer mounted on the electrode, and a color filter layer mounted on the ink fixing layer and having a plurality of pixels. Each of the pixels includes a first subpixel, a second subpixel, and a transparent third subpixel. The first subpixel includes a colored portion showing a first color. The second subpixel includes a colored portion showing a second color. The second color is complementary to the first color. When an area of the colored portion in the first subpixel is set to 1.0, an area of the colored portion in the second subpixel is set to be within a range from 0.2 to 1.0 inclusive, and an area of the third subpixel is set to be within a range from 0.5 to 8.0 inclusive.

A percentage of the area of the colored portion in the first subpixel is set to be within a range from 50% to 90% inclusive.

The colored portion in the first subpixel can include a red-colored portion, and the colored portion in the second subpixel can include a cyan-colored portion.

The reflective display layer can include an electrophoretic display layer.

The electrophoretic display layer includes a microcapsule layer configured such that microcapsules each including at least white particles and black particles are dispersed in a resin.

A method of driving the reflective display set forth above includes setting a portion of the reflective display layer to black; the portion matches with the first subpixel. The method includes setting portions of the reflective display layer to white to display white in a whole of the subpixels; the portions respectively match with the second and third subpixels.

A method of driving the reflective display set forth above includes setting a portion of the reflective display layer to black; the portion matches with the second subpixel. The method includes setting portions of the reflective display layer to white to display the first color in a whole of the subpixels; the portions respectively match with the first and third subpixels.

A method of driving the reflective display set forth above includes setting portions of the reflective display layer to black to display black in a whole of the subpixels; the portions respectively match with the first, second, and third subpixels.

## Advantageous Effects of Invention

The present invention provides electrophoretic color reflective displays capable of displaying three colors including a bright color, a clear white, and black.

## Brief Description of Drawings

Fig. 1 is a cross sectional view illustrating an electrophoretic display device equipped with a color filter according to an embodiment of the present invention;

Figs. 2A to 2C are views illustrating how an electrophoretic display panel according to the embodiment of the present invention displays colors;

Figs. 3A and 3B are views illustrating how a conventional monochrome electrophoretic display panel displays colors; and

Figs. 4A and 4B are views illustrating how a conventional full-color electrophoretic display panel displays colors.

## Description of Embodiment

An embodiment of the present invention will be described in detail hereinafter.

Fig. 1 is a cross sectional view illustrating an electrophoretic display device equipped with a color filter according to the embodiment of the present invention.

The electrophoretic display device 1 includes a substrate 10 having a surface on which pixel electrodes 11 having a predetermined pattern are mounted. The electrophoretic display device 1 includes an electrophoretic display layer 13 formed on the substrate 10 via an adhesive layer 12. On the electrophoretic display layer 13, a transparent electrode layer 14, an ink fixing layer 17, a color filter 15, and a protective film 16 are laminated in this order.

The pixel electrodes 11 are connected to respective switching elements, and adapted to apply a positive or negative voltage between the transparent electrode layer 14 and themselves.

The electrophoretic display layer 13 is comprised of microcapsules fixed by a binder resin; each of the microcapsules is comprised of a microcapsule shell, transparent dispersion medium, and electrophoretic particles having

different electrical polarities and distributed in the transparent dispersion medium.

Black and white particles can be used as the particles having different electrical polarities. As the black electrophoretic particles, inorganic pigments, such as inorganic carbons; fine glass powder; fine resin powder; or a complex of them can be used. As the white electrophoretic particles, known white inorganic pigments made of, for example, titanium oxide, silica, alumina, or zinc oxide; organic compounds, such as vinyl acetate emulsions; or a complex of them can be used.

The color filter 15 includes two-color subpixels that are complementary to each other, and transparent subpixels. For example, each pixel of the color filter 15 is comprised of a red subpixel R, a cyan subpixel C, and transparent subpixels T. Each subpixel is arranged to match with a corresponding one of the patterned pixel electrodes 11. The red subpixel R corresponds to a first subpixel, the cyan subpixel C corresponds to a second subpixel, and the transparent subpixel corresponds to a third subpixel. The color filter 15 can be formed by photolithography using a colored resist film in the same manner as color filters for liquid crystal displays. For the color filter used for the electrophoretic display device according to this embodiment, forming the ink fixing layer 17, i.e. a receptive layer, on the substrate and coating a plurality of ink droplets on the ink fixing layer 17 make it possible to produce the color filter. Specifically, applying coating liquid, which includes a resin, for forming the ink fixing layer 17 on the substrate forms the ink fixing layer 17. Ink droplets are coated on the ink fixing layer to form a plurality of colored portions. Each of the colored portions is arranged to correspond to a unit, i.e. a subpixel, driven by the pixel electrodes 11. Note that one pixel shows a minimum combination of predetermined subpixels in a horizontal direction and/or predetermined subpixels in a vertical direction. For example, as illustrated in Fig. 2C, four subpixels constitute each pixel. Each subpixel corresponds to a unit driven by the pixel electrodes 11. For example, the red subpixel R, which is a subpixel corresponding to a unit driven by the pixel electrodes 11, represents a region where a red colored portion and a non-colored portion are formed.

As described above, the color filter 15 includes subpixels respectively having different colors that are complementary to each other. In the respective two-color subpixels that have complement to each other, corresponding colored portions are formed. The two complementary colors are not limited to red and cyan. Magenta and green or yellow and blue may be for example used as the two complementary colors. Any two colors, a mixture of which has a complement to white, can be used as the first subpixel and the second subpixel.

Each of the two-color subpixels that are complementary to each other is not necessarily comprised of a single colored layer. Each of the two-color subpixels that are complementary to each other can be comprised of plural colored layers different in color from each other; a mixture of the different colors shows a predetermined color. For example, The cyan subpixel C can be comprised of a green-colored layer and a blue-colored layer; a mixture of green and blue appears as cyan.

As an example illustrated in Fig. 1, the color filter 15 is comprised of the red subpixel R, the cyan subpixel C, and the transparent subpixels T, red and cyan of which are complementary to each other. Each transparent subpixel T can be composed of a transparent resin or a cavity.

The number of subpixels included in each pixel is not limited to a specific number. The number of the first subpixels and the number of the second subpixels can be equal to each other or different from each other.

As illustrated in Figs. 2A to 2C, the subpixels can be arranged diagonally or arranged in a stripe. In order to prevent color mixture, it is desirable that colored subpixels should be arranged diagonally. Detailed information about the arrangement of the subpixels will be described later.

The areas of the colored portions formed in each subpixel can be equal to or different from each other. If the subpixels are red, cyan, and transparent subpixels, when the area of the red-colored portion is set to 1.0, the area of the cyan-colored portion is preferably set to be within the range from 0.2 to 1.0 inclusive. If the area of the cyan-colored portion was lower than 0.2 while the area of the red-colored portion is set to 1.0, sufficient color density for adjusting hue shift by the red-colored portions when white is displayed would not be obtained. If the area of the cyan-colored portion was higher than 1.0 while the area of the red-colored portion is set to 1.0, the reduction in brightness when white is displayed would likely be pronounced.

If the subpixels are red, cyan, and transparent subpixels, when the area of the red-colored portion is set to 1.0, the area of each transparent subpixel is preferably set to be within the range from 0.5 to 8.0 inclusive, and more preferably set to be within the range from 1.0 to 4.0 inclusive. If the area of each transparent subpixel was lower than 0.5 while the area of the red-colored portion is set to 1.0, brightness when white is displayed would not be sufficiently obtained. If the area of each transparent subpixel was higher than 8.0 while the area of the red-colored portion is set to 1.0, the reduction in chroma (colorfulness, saturation) when white is displayed would likely be pronounced. It is preferable that, when each subpixel has a rectangular shape, one side of each subpixel is normally set to be within the range from 50 to 200 $\mu$m.

It is necessary that the percentage of the area of the colored portion in the red subpixel R defined as the first subpixel is set to be within the range from 50% to 90% inclusive. If the percentage of the area of the colored portion in the red subpixel R defined as the first subpixel was set to be lower than 50%, display characteristics would likely be reduced because, although brightness when white is displayed would be ensured, required color depth would not be obtained. If the percentage of the area of the colored portion in the red subpixel R defined as the first subpixel was set

to be higher than 90%, display characteristics might be affected for the following reason:

If the percentage of the area of the colored portion in the red subpixel R defined as the first subpixel was set to be higher than 90%, the colored portion would be located at a boundary between subpixels. In the case of normal driving by the pixel electrodes, display media, i.e. microcapsules, located at the boundary might not be sufficiently driven due to leakage of electrical field from the pixel electrodes. This insufficient driving might result in insufficient changes in the microcapsules, so that, because the colored portion would be located at the boundary between subpixels, display characteristics might be affected.

The aforementioned example is that the red subpixel is used as the first subpixel, and the cyan subpixel is used as the second subpixel. As another example, let us consider a case where other complementary colors, a mixture of which appears white, are used as the first and second subpixels. In this case, when the area of the colored portion in the first subpixel is set to 1.0, the area of the colored portion in the second subpixel is preferably set to be within the range from 0.2 to 1.0 inclusive. If the area of the colored portion in the second subpixel was lower than 0.2 while the area of the first subpixel is set to 1.0, sufficient color density for adjusting hue shift by the colored portions in the first subpixels when white is displayed would not be obtained. If the area of the colored portion in the second subpixel was higher than 1.0 while the area of the colored portion in the first pixel is set to 1.0, the reduction in brightness when white is displayed would likely be pronounced.

When the area of the colored portion in the first subpixel is set to 1.0, the area of each transparent subpixel is preferably set to be within the range from 0.5 to 8.0 inclusive, and more preferably set to be within the range from 1.0 to 4.0 inclusive. If the area of each transparent subpixel was lower than 0.5 while the area of the colored portion in the first subpixel is set to 1.0, brightness when white is displayed would not be sufficiently obtained. If the area of each transparent subpixel was higher than 8.0 while the area of the colored portion in the first subpixel is set to 1.0, the reduction in chroma when white is displayed would likely be pronounced.

If other complementary colors, are used as the first and second subpixels, it is necessary that the percentage of the area of the colored portion in the first subpixel is set to be within the range from 50% to 90% inclusive. If the percentage of the area of the colored portion in the first subpixel was set to be lower than 50%, display characteristics would likely be reduced because, although brightness when white is displayed would be ensured, required color depth would not be obtained. If the percentage of the area of the colored portion in the first subpixel was set to be higher than 90%, display characteristics might be affected for the following reason:

If the percentage of the area of the colored portion in the first subpixel was set to be higher than 90%, the colored portion would be located at a boundary between subpixels. In the case of normal driving by the pixel electrodes, display media, i.e. microcapsules, located at the boundary might not be sufficiently driven due to leakage of electrical field from the pixel electrodes. This insufficient driving might result in insufficient changes in the microcapsules, so that, because the colored portion would be located at the boundary between subpixels, display characteristics might be affected.

As the material for the ink fixing layer 17, a urethane resin, a polyester resin, an acrylic resin, a vinyl alcohol resin, or the like can be for example used. The ink fixing layer 17 can contain a porous material, such as synthetic silica or alumina in order to increase the absorbability of ink solvents. When a sheeting process is employed, the ink fixing layer 17 can be formed using screen printing, offset printing, spin coating, intermittent coating with dies. When a continuous process based on a roll-to-roll process is employed, the ink fixing layer 17 can be formed using a general coating technology, such as die coating, comma coating, curtain coating, gravure coating, or the like. Coating liquid for forming the ink fixing layer, which was coated on the substrate, need be dried using heating, blowing, or the like.

It is necessary to individually coat respective colors of ink on the ink fixing layer 17 because no black matrixes for separating pixels are formed. For this reason, ink can be applied to the ink fixing layer 17 of the color filter 15 using screen printing, offset printing, inkjet printing, or the like. Particularly, it is preferable that ink is ejected to the ink fixing layer 17 using inkjet printing to form the color filter 15 because of simplicity in alignment and higher productivity.

A piezo inkjet printer and a thermal inkjet printer, which are different in ink-ejecting method, can be used to perform the ink-jet printing, and the piezo inkjet printer is preferably used. It is preferable that the frequency of changing ink into particles used by a printer that performs inkjet printing is set within the range from 5 to 100 kHz inclusive. The diameters of ink nozzles of a printer performing inkjet printing can be set within the range from 5 to 80 $\mu$m. As a printer for performing inkjet printing, a printer installed with substantially five to six hundred nozzles for each head is preferably used.

Ink is composed of a corresponding coloring material, a solvent, a binder resin, and a dispersing agent.

As coloring materials for pieces of ink, all pigments, such as organic pigments, inorganic pigments, and dyes, can be used, and preferably organic pigments are used. Particularly, organic pigments with superior light resistance are preferably used.

Pigments used for coloring materials for pieces of ink can include

(1) C. I. Pigment Reds 919, 38, 43, 97, 122, 123, 144, 149, 166, 168, 177, 179, 180, 192, 208, 215, 216, 217, 220,

223, 224, 226, 227, 228, 240, and 254
(2) Pigment Blues 15, 15:6, 16, 22, 29, 60, and 64
(3) C. I. Pigment Greens 7, 36, 56
(4) C.I. Pigment Yellow 20, 24, 86, 81, 83, 93, 108, 109, 110, 117, 125, 137, 138, 139, 147, 148, 150, 153, 154, 166, 168, and 185
(5) Pigment Orange 36 and 73
(6) Pigment Violet 23.

Mixture of two or more pigments in these pigments can be used to obtain a desired hue.

Solvents usable as materials for ink preferably have a surface tension range 35 mN/m or lower, which is suitable for ink-jet printing, and a boiling point 130 °C or higher. A solvent having the surface tension range higher than 35 mN/m used as materials for ink could have a negative impact on the stability of ejected dot shapes. A solvent having a boiling point lower than 130 °C could cause excessive dry around the nozzles, so that there could be a failure in a nozzle, such as nozzle clogging.

Specifically, solvents usable as materials for ink include 2-methoxyethanol, 2-ethoxyethanol, 2-butoxyethanol, 2-ethoxyethyl acetate, 2-butoxyethyl acetate, 2-methoxyethyl acetate, 2-ethoxyethyl ether, 2-(2-ethoxyethoxy)ethanol, 2-(2-butoxyethoxy)ethanol, 2-(2-ethoxyethoxy)ethyl acetate, 2-(2-butoxyethoxy)ethyl acetate, 2-phenoxyethanol, diethylene glycol dimethyl ether, and the other similar solvents. Solvents usable as materials for ink are however not limited to these described solvents, and other solvents that satisfy the requirements set forth above can be used as materials for ink. If necessity arises, a mixture of two or more solvents can be used as materials for ink.

As a binder resin of a corresponding piece of ink, one of acrylic resins, one of novolak resins, one of epoxy resins, one of melanin resins, or another similar resin can be used.

The acrylic resins can be produced from polymers. The polymers can include, as a monomer, (meth)acrylic acid; alkyl (meth)acrylate, such as methyl (meth)acrylate, ethyl (meth)acrylate, propyl (meth)acrylate, butyl (meth)acrylate, benzyl (meth)acrylate, lauryl (meth)acrylate, hydroxyethyl (meth)acrylate, hydroxypropyl (meth)acrylate, ethoxyethyl (meth)acrylate, glycidyl (meth)acrylate, or the like; and an alicyclic (meth)acrylate, such as cyclohexyl (meth)acrylate, isobornyl (meth)acrylate dicyclopentenyl (meth)acrylate. The acrylic resins are however not limited to these materials. One of these monomers may be used alone, or two or more thereof may be used in combination. In addition, as the acrylic resins, copolymers may be used; these copolymers result from reaction between these acrylate monomers and compounds copolymerizable with these acrylate monomers. These compounds include styrene, cyclohexylmaleimide, phenylmaleimide, cyclohexylmaleimide, phenylmaleimide, methylmaleimide, ethylmaleimide, n-butylmaleimide, and laurylmaleimide.

An ethylenic unsaturated group can be added to the acrylic resins. Various methods for adding an ethylenic unsaturated group to the acrylic resins can be used. These methods include

(1) A method of adding an ethylenically unsaturated group, such as acrylic acid, and a carboxylic acid-containing compound to an epoxy resin, such as glycidyl methacrylate
(2) A method of adding epoxy-containing acrylate, such as glycidyl methacrylate, to a carboxylic acid-containing resin, such as a methacylic acid
(3) A method of adding isocyanate group-containing acrylate, such as methacryloyloxyethyl isocyanate, to a hydroxyl group-containing resin, such as hydroxymethacrylate.

However, the method for adding an ethylenic unsaturated group to the acrylic resins are not limited to these methods.

The novolak resins can be produced from a phenolic novolak epoxy resin, a cresol novolak epoxy resin, or another resin. The novolak resins are however not limited to these resins.

Epoxy resins that can be used are not especially restricted, and therefore can be selected from generally available ones. The number of epoxy groups is unlimited, but epoxy resins having two or more functional groups are preferably used. More preferably, epoxy resins having four or more functional groups are used. For example, Celloxide® 2021P, Celloxide 3000, EHPE-3150, which are manufactured by Diacel Chemical Industries Co., Ltd, AK601, EPPN series, which are manufactured by NIPPON KAYAKU Co., Ltd, can be used.

Melanin resins that can be used are not especially restricted, and therefore can be selected from generally available ones. For example, melanin compounds expressed by the following general formula (I) are preferably used:

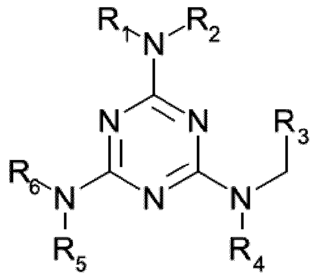

(I)

$R_1$, $R_2$, and $R_3$ can be identical to or different from each other. Preferably, $R_1$, $R_2$, and $R_3$ are each selected from a hydrogen atom, a methyl group, an alkoxymethyl group, and an alkoxy n-butyl group.

$R_4$, $R_5$, and $R_6$ can be identical to or different from each other. Preferably, $R_4$, $R_5$, and $R_6$ are respectively a methyl group, an alkoxymethyl group, and an alkoxy n-butyl group. More preferably, $R_1$ to $R_6$ are each selected from an alkoxymethyl group, and an alkoxy n-butyl group.

As the melanin resins, copolymers each resulting from combination of two or more kinds of repeating units can be used. In addition to these copolymers, two or more kinds of homopolymers or copolymers can be used. Other than the aforementioned materials, compounds, which contain containing a 1, 3, 5-triazine ring and expressed by the following general formula (II), can be used:

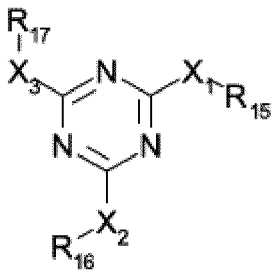

(II)

$X_1$, $X_2$, and $X_3$ are respectively $-NR_{18}-$, $-NR_{19}-$, and $-NR_{20}-$, or $X_1$, $X_2$, and $X_3$ express each a single bound, and $R_{15}$, $R_{16}$, and $R_{17}$ are each a heterocyclic group whose nitrogen atom has free atomic valence. Preferably, $-X_1-R_{15}-$, $-X_2-R_{16}-$, and $-X_3-R_{20}-$ are the same substituent group. It is particularly preferable that $R_{15}$, $R_{16}$, and $R_{17}$ are each an aryl group, and that $R_{18}$, $R_{19}$, and $R_{20}$ are each an hydrogen atom.

In addition, the following general formula (III) can be used:

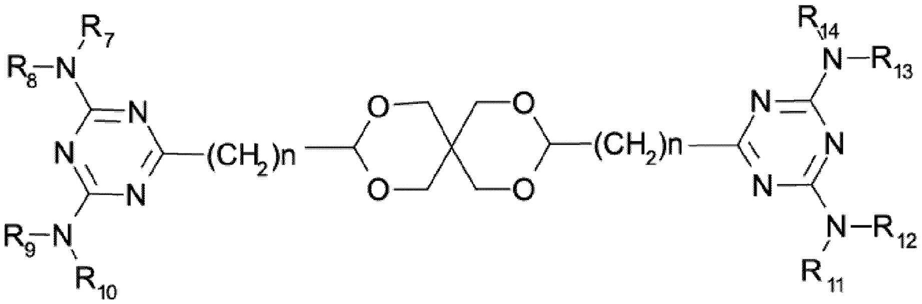

(III)

$R_7$ to $R_{14}$ can be identical to or different from each other. Preferably, $R_7$ to $R_{14}$ are each selected from a hydrogen atom, an alkyl group, an alkenyl group, and a heterocyclic group. It is particularly preferable that $R_7$ to $R_{14}$ are each a hydrogen atom.

The weight-average molecular weight of a binder resin is preferably set to be within the range from 500 to 10000 inclusive, and more preferably within the range from 500 to 8000 inclusive. If the weight-average molecular weight of a binder resin exceeded 10000, the flowability of ink during a drying process of the colored layers would become insufficient. This would cause a problem of concentration variations in the colored regions. If the weight-average molecular weight of a binder resin was smaller than 500, it would be difficult to satisfy the physical properties required for color filters; the physical properties include solvent resistance and heat resistance.

Dispersing agents for corresponding pieces of ink can be used for improvement of the dispersiblity of the pigments in the corresponding solvent. As the dispersing agents, ionic or non-ionic surface-active agents can be used.

Specifically, as the dispersing agents, alkyl benzene sulfonates, poly fatty acid salts, fatty acid salt alkyl phosphates, tetraalkylammonium salts, and polyoxyethylene alkyl ethers can be used. Organic pigments derivatives, polyesters, and other similar materials can also be used as the dispersing agents. One dispersing agent can be merely used, or a mixture of two or more dispersing agents can be used.

The consistency of ink is preferably set within the range from 1 to 20 mPa·s inclusive, more preferably within the range from 5 to 15 mPa·s inclusive. If the consistency of ink was greater than 20 mPa·s, there might be a failure caused by droplets of ink ejected during the inkjet printing landing onto undesired positions, or a failure of nozzle clogging. If the consistency of ink was smaller than 1 mPa·s, ejected ink might be scattered.

Next, the operating principle of the electrophoretic display device illustrated in Fig. 1 will be described.

Applying a voltage to the pixel electrodes 11 changes the electrical field applied to the microcapsules contained in the electrophoretic display layer 13. For a positive pixel electrode 11, negatively charged particles contained in each microcapsule move toward the corresponding pixel electrode 11 while positively charged particles move toward the transparent electrode layer 14. In contrast, for a negative pixel electrode 11, positively charged particles contained in each microcapsule move toward the corresponding pixel electrode 11 while negatively charged particles move toward the transparent electrode layer 14.

For example, let us assume that black particles are positively charged, white particles are negatively charged, and a corresponding pixel electrode is a negative electrode. In this assumption, as illustrated in Fig. 1, the positively charged black particles move toward the side of the corresponding pixel electrode 11 while the negatively charged white particles move toward the side of the transparent electrode layer 14. This causes all rays of light to be reflected by the surface of the microcapsule layer at which the white particles are located. The reflected light passes through the color filter 15, making it possible to view the light passing through the color filter 15.

Figs. 2A and 2B illustrate how an electrophoretic display panel 21 according to this embodiment displays colors based on the aforementioned operating principal. The electrophoretic display panel 21 includes a black-and-white electrophoretic display layer 22, and a color filter 23. The color filter 23 includes two-colored subpixels complementary to each other, such as a red subpixel R and a cyan subpixel C. The color filter 23 is arranged on the electrophoretic display layer 22. The color filter 23 is configured such that four subpixels constitute each pixel. That is, the remaining two subpixels are transparent subpixels T each consisting of, for example, a transparent resin. Fig. 2C is a schematic view when the four subpixels illustrated in Fig. 2A is viewed from the upper side of the four subpixels. As illustrated in Fig. 2C, the red subpixel R is comprised of a red colored portion and a non-colored portion, and the cyan subpixel C is comprised of a cyan colored portion and a non-colored portion.

Fig. 2A illustrates a one-pixel corresponding segment of the electrophoretic display layer 22 corresponding to one pixel. Specifically, Fig. 2A illustrates a case where

(1) A portion of the one-pixel corresponding segment of the electrophoretic display layer 22, which matches with the red subpixel R, is set to black
(2) The remaining portion of the one-pixel corresponding segment of the electrophoretic display layer 22 is set to white.

Fig. 2B illustrate a one-pixel corresponding segment of the electrophoretic display layer 22 corresponding to one pixel. Specifically, Fig. 2B illustrates a case where

(1) A portion of the one-pixel corresponding segment of the electrophoretic display layer 22, which matches with the cyan subpixel C, is set to black
(2) The remaining portion of the one-pixel corresponding segment of the electrophoretic display layer 22 is set to white.

Fig. 2A shows that the portion of the one-pixel corresponding segment of the electrophoretic display layer 22, which matches with the red subpixel R, is set to black. This results in mixture of light passing through the cyan subpixel C and light passing through the transparent subpixels T; the mixture should be expressed in principle as light cyan. However, mixture of the light cyan, color due to surface reflectance on the red subpixel R, and pale red actually appears; the pale red results from the influence of slightly reflected light in the black display. However, because cyan and red are complementary to each other, the mixture is expressed as natural white.

Fig. 2B shows that the portion of the one-pixel corresponding segment of the electrophoretic display layer 22, which matches with the cyan subpixel C, is set to black. This results in light, which has passed through the color filter 23,

(1) Only slightly reflected by the portion of the electrophoretic display layer 22, which matches with the cyan subpixel C
(2) Reflected by the portion of the electrophoretic display layer 22, which matches with the remaining subpixels.

This results in part of the reflected light, which has passed through the red subpixel R, being displayed in red.

When the one-pixel corresponding segment of the electrophoretic display layer 22 is set to black, because no

light exists passing through the color filter 23 to be viewed, black is naturally displayed.

In addition, it is necessary to adjust the color concentration of the cyan subpixel C according to the color concentration of the red subpixel R in the design of the colorway of the color filter 23.

The influence of the red subpixel R of the color filter 23 has a small effect on the white balance for displaying white as compared with the influence in a case where a portion of the electrophoretic display layer 22, which matches with the red subpixel R, is displayed in white so that the portion becomes an effective pixel.

This is because, as illustrated in Fig. 2A, for displaying white, a portion of the one-pixel corresponding segment of the electrophoretic display layer 22, which matches with the red subpixel R, is set to black so that the portion becomes an ineffective pixel.

Thus, it is possible to very easily adjust the color balance including the cyan subpixel C. This achieves an advantage in that chroma of displayed red is widely changeable while natural white is displayable. Detailed information about white display in full color will be described later.

The electrophoretic display panel 21 illustrated in Figs. 2A and 2B is comprised of two subpixels respectively have colored complementary to each other, and remaining subpixels that are transparent subpixels each consisting of a transparent resin. This configuration of the display panel 21 makes it possible to display bright and brilliant color, such as red, clear white, and black.

Figs. 3A and 3B illustrate an electrophoretic display panel 31 for displaying three colors including white, black, and another color according to a comparative example. The electrophoretic display panel 31 includes a black-and-white electrophoretic display layer 32, and a color filter 33. The color filter 33 includes a single-colored subpixel, such as a red subpixel R. The color filter 33 is arranged on the electrophoretic display layer 32. The color filter 33 is configured such that four subpixels constitute one pixel. That is, the remaining three subpixels are transparent subpixels T each consisting of, for example, a transparent resin.

Fig. 3A illustrates a one-pixel corresponding segment of the electrophoretic display layer 32 corresponding to one pixel. Specifically, Fig. 3A illustrates a case where

(1) A portion of the one-pixel corresponding segment of the electrophoretic display layer 32, which matches with the red subpixel R, is set to black

(2) The remaining portion of the one-pixel corresponding segment of the electrophoretic display layer 32, which matches with the three transparent subpixels T, is set to white.

Fig. 3B illustrates a one-pixel corresponding segment of the electrophoretic display layer 32 corresponding to one pixel. Specifically, Fig. 3B illustrates a case where the one-pixel corresponding segment of the electrophoretic display layer 32 is entirely set to white.

Fig. 3A shows that the portion of the one-pixel corresponding segment of the electrophoretic display layer 32, which matches with the red subpixel R, is set to black. As a result, light, which has passed through the color filter 33, is not reflected by the portion of the electrophoretic display layer 32, which matches with the red subpixel R, but reflected by the portion of the electrophoretic display layer 32, which matches with the remaining subpixels.

This results in reflected light passing through the transparent subpixels T, so that white is displayed.

Fig. 3B shows that the one-pixel corresponding segment of the electrophoretic display layer 32 is set to white. This results in the whole light, which has passed through the color filter 33, reflected by the electrophoretic display layer 32. Part of the reflected light passing through the red subpixel R displays red.

The configuration of the electrophoretic display panel 31 obtains a desired value of red chroma based on the concentration of the red subpixel R when red is displayed as illustrated in Fig. 3B. However, when white is attempted to be displayed as illustrated in Fig. 3A, surface reflection on the red subpixel R and slightly reflected light cause pale red to be displayed; the slightly reflected light takes place although there is little reflection by the black-presentation portion, which matches with the red subpixel R.

Particularly, the concentration of the red subpixel R causes the color balance for the displayed white to change to have a red chroma. Thus, as the concentration of the colored portion of the red subpixel R increases, the white balance for displaying white causes the hue to be deviated to red, resulting in reduction of display contrast.

Figs. 4A and 4B illustrate a conventional full-color electrophoretic display panel 41. The electrophoretic display panel 41 includes a black-and-white electrophoretic display layer 42, and a color filter 43. The color filter 43 includes three primary-colored subpixels, such as a red subpixel R, a green subpixel G, and a blue subpixel B. The color filter 43 is arranged on the electrophoretic display layer 42. The color filter 43 is configured such that four subpixels constitute one pixel. That is, the remaining one subpixel is a transparent subpixel T consisting of, for example, a transparent resin.

Fig. 4A illustrates a one-pixel corresponding segment of the electrophoretic display layer 42 corresponding to one pixel. Specifically, Fig. 4A illustrates a case where the one-pixel corresponding segment of the electrophoretic display layer 42 is entirely displayed in white.

Fig. 4B illustrates a one-pixel corresponding segment of the electrophoretic display layer 42 corresponding to

one pixel. Specifically, Fig. 4B illustrates a case where

(1) A portion of the one-pixel corresponding segment of the electrophoretic display layer 42, which matches with the red subpixel R, is set to white
(2) The remaining portion of the one-pixel corresponding segment of the electrophoretic display layer 42, which matches with the remaining subpixels, is set to black.

Fig. 4A shows that the one-pixel corresponding segment of the electrophoretic display layer 42 is entirely set to white. This results in the whole light, which has passed through the color filter 43, being reflected by the electrophoretic display layer 42. Mixture of part of the reflected light passing through the red subpixel R, part of the reflected light passing through the green subpixel G, and part of the reflected light passing through the blue subpixel B displays white.
Fig. 4B shows that the portion of the one-pixel corresponding segment of the electrophoretic display layer 42, which matches with the red subpixel R, is set to only white. As a result, light, which has passed through the color filter 43, is reflected by the portion of the electrophoretic display layer 42, which matches with the red subpixel R, but is non-reflected by the portion of the electrophoretic display layer 42, which matches with the remaining subpixels.
This displays red.
The compared results between the electrophoretic display panel 41 and the electrophoretic display panel 21 will be described hereinafter.
For displaying white, all the subpixels of the electrophoretic display panel 41 serve as effective pixels. In contrast, for displaying white, the subpixels except for the red subpixel R of the electrophoretic display panel 21 serve as effective pixels. This may suggest that the electrophoretic display panel 41 may have an advantage over the electrophoretic display panel 21.
However, actually, the electrophoretic display panel 41 likely has the lower reflectivity for displaying white. This is because the electrophoretic display panel 41 has many subpixels with colored portions so that, as compared with the electrophoretic display panel 21, the number of subpixels for mixture is greater but the number of transparent subpixels T, i.e. transparent resin layers, is smaller.
In addition, in the design of the colorway of the color filter 43 of the electrophoretic display panel 41, changing red chroma has a great influence on the white balance for displaying white because the red subpixels serve as effective pixels, which are pixels contributing to displaying. For example, an increase of the concentration of the red subpixels R needs to increase the concentration of the other subpixels. That is, changing red chroma changes significantly the reflectivity for displaying white. This makes it difficult to satisfy both improved chroma (clearness) of each color and improved reflectivity (brightness) for displaying white.
Note that the electrophoretic display devices as reflective displays equipped with a color filter according to the present invention have been described, but the reflective displays are not limited thereto. Specifically, there can be provided reflective displays equipped with a reflective display layer that is capable of displaying its portions corresponding to subpixels in black or white based on application of a voltage.

**Examples**

A specific example of the present invention will be described hereinafter. However, the present invention is not limited to only the examples.

[Example 1]

*Manufacturing electrophoretic display device having structure illustrated in Fig. 1*

Titanium oxide powder serving as white particles was prepared. Each particle of the titanium oxide powder has an average particle diameter of 3 μm, and the surface of each particle of the titanium oxide powder is coated with a polyethylene resin. Carbon black powder serving as black particles was prepared. Each particle of the carbon black powder, which is surface-treated with alkyltrimethyl ammonium chloride, has an average particle diameter of 4 μm. The titanium oxide powder and the carbon black powder were dispersed into tetrachloroethylene, so that dispersion liquid was obtained. The white particles were negatively charged, and the black particles were positively charged.
The dispersion liquid was emulsified into O/W emulsion. Microcapsules were formed by the complex coacervation method using gelatin-gum arabic, so that the dispersion liquid was encapsulated into the microcapsules. The microcapsules obtained set forth above were sifted. The sifting caused particle diameters of the sifted microcapsules to be uniformed such that the percentage of ones, which have an average particle diameter of 60 μm and a particle diameter falling within the range from 50 to 70 μm inclusive, was set to be equal to or more than 50%.
Next, water dispersion having a solid content of 40 mass% thereof for the microcapsules was prepared. Mixture

of the water dispersion, an urethane-based binder (CP-7050), surfactant, thickener, and pure water produced coating liquid for forming electrophoretic layers. The urethane-based binder (CP-7050) has a solid content of 25 mass% thereof, and is manufactured by DIC Co., Ltd.

A substrate made of glass was prepared; pixel electrodes produced from ITO were mounted on a surface of the substrate. The coating liquid was coated on a substrate, for example, a glass substrate to form an electrophoretic layer; pixel electrodes produced from ITO are mounted on a surface of the substrate. On the electrophoretic layer, a transparent conductive layer made of ITO was mounted. On the transparent conductive layer, polyester-resin receptor liquid NS-141LX manufactured by TAKAMATSU OIL & FAT Co., LTD was coated using a comma coater, thus forming an ink fixing layer having an average film thickness of 10 μm.

Separated colors were printed on the ink fixing layer for respective subpixels using inkjet printing, so that a color filter was formed. During the printing, alignment was performed so that subpixels were formed in alignment with the corresponding pixel electrodes. As illustrated in Figs. 2A to 2C, the color filter is configured such that a rectangular red subpixel R, a rectangular cyan subpixel C, and two transparent subpixels T are arranged at opposing corners for each pixel. The area of the colored portion in the red subpixel R and the area of the colored portion in the cyan subpixel C are respectively set to 70% and 40%. When the area of the colored portion in the red subpixel R is set to 1.0, the area of the colored portion in the cyan subpixel C is set to 0.6, and the area of each transparent subpixel T is set to 2.9. Finally, a protective film was mounted on the color filter, so that an electrophoretic display device was manufactured.

White-display properties when the electrophoretic display device manufactured set forth above displays white and red-display properties when the electrophoretic display device displays red were measured. The white-display properties include reflectivity and hue, and the red-display properties include chroma. Note that chroma is represented in an L*a*b* color model using the following equation

$$c^* = \{(a^*)^2 + (b^*)^2\}^{1/2}$$

Measurement was carried out as reflection measurement using a D65 light source and spectrophotometer SE6000 manufactured by NIPPON DENSHOKU INDUSTRIES Co., LTD with a measurement spot diameter Φ being set to 6 mm.

The measured results show that

(1) Reflectivity r represents 22.3 and hue (a*, b*) was (-2, -1) as the white-display properties
(2) Chroma (c*) was 13.5 as the red-display properties.

Specifically, the measured results demonstrate that the display device, which is configured such that, when the area of the colored portion in the red subpixel R is set to 1.0, the area of the colored portion in the cyan subpixel and the area of each transparent subpixel T are set to the respective values set forth above, is capable of displaying bright and clear white and vivid red.

[Comparative example 1]

An electrophoretic display device was manufactured in the same procedure as that described in the example except that, as the color filter, a color filter including a red-colored subpixel R and three transparent subpixels T illustrated in Figs. 3A and 3B for monochrome displays was used.

Like the example, white-display properties when the electrophoretic display device displays white and red-display properties when the electrophoretic display device displays red were measured. The white-display properties include reflectivity and hue, and the red-display properties include chroma.

The measured results show that

(1) Reflectivity r represents 24.5 and hue (a*, b*) was (3, 1) as the white-display properties
(2) Chroma (c*) was 13.5 as the red-display properties.

As compared with the example 1, the same value of the chroma when red is displayed is obtained, but the hue when white is displayed takes on pale red, resulting in vivid red not being obtained.

[Comparative example 2]

An electrophoretic display device was manufactured in the same procedure as that described in the example

except that, as the color filter, a color filter including a red-colored subpixel R, a green subpixel G, a blue subpixel B, and a transparent subpixel T illustrated in Figs. 4A and 4B for full-color displays was used. The area of the colored portion in each of the red subpixel R, the green subpixel G, and the blue subpixel B is set to 70%.

Like the example, white-display properties when the electrophoretic display device displays white and red-display properties when the electrophoretic display device displays red were measured. The white-display properties include reflectivity and hue, and the red-display properties include chroma.

The measured results show that

(1) Reflectivity r was 21.0 and hue (a*, b*) represents (-2, -2) as the white-display properties
(2) Chroma (c*) was 7.2 as the red-display properties.

As compared with the example 1, the same value of the hue when white is displayed is obtained, but the reflectivity is slightly reduced, and the chroma when red is displayed becomes insufficient, resulting in poor-contrast display.

As described above, the electrophoretic display device according to the example 1 is capable of, in the white-display properties and the red-display properties,

(1) Displaying clearer white and more vivid red as compared with the monochrome electrophoretic display device according to the comparative example 1
(2) Having higher reflectivity for displaying white and displaying clearer red as compared with the full-color electrophoretic display device according to the comparative example 2.

**Industrial applicability**

The present invention is useful for electrophoretic color reflective displays capable of displaying three colors including a bright color, a clear white, and black.

**Description of characters**

| | |
|---|---|
| 10 | Substrate |
| 11 | Pixel electrode |
| 12 | Adhesive layer |
| 13, 22, 32, 42 | Electrophoretic display layer |
| 14 | Transparent electrode layer |
| 15, 23, 33, 43 | Color filter |
| 16 | Protective film |
| 17 | Ink fixing layer (receptive layer) |
| 21, 31, 41 | Electrophoretic display panel |

**Claims**

**1.** A reflective display comprising:

a substrate;
a plurality of pixel electrodes mounted on the substrate;
a reflective display layer mounted on the plurality of pixel electrodes;
an electrode mounted on the reflective display layer;
an ink fixing layer mounted on the electrode; and
a color filter layer mounted on the ink fixing layer and having a plurality of pixels,
wherein:

each of the pixels includes a first subpixel, a second subpixel, and a transparent third subpixel, the first subpixel including a colored portion showing a first color, the second subpixel including a colored portion showing a second color, the second color being complementary to the first color; and
when an area of the colored portion in the first subpixel is set to 1.0, an area of the colored portion in the

second subpixel is set to be within a range from 0.2 to 1.0 inclusive, and an area of the third subpixel is set to be within a range from 0.5 to 8.0 inclusive.

**2.** The reflective display according to claim 1, wherein a percentage of the area of the colored portion in the first subpixel is set to be within a range from 50% to 90% inclusive.

**3.** The reflective display according to claim 1 or 2, wherein the colored portion in the first subpixel comprises a red-colored portion, and the colored portion in the second subpixel comprises a cyan-colored portion.

**4.** The reflective display according to any one of claims 1 to 3, wherein the reflective display layer comprises an electrophoretic display layer.

**5.** The reflective display according to claim 4, wherein the electrophoretic display layer comprises a microcapsule layer configured such that microcapsules each including at least white particles and black particles are dispersed in a resin.

**6.** A method of driving the reflective display according to any one of claims 1 to 5, the method comprising:

setting a portion of the reflective display layer to black, the portion matching with the first subpixel; and setting portions of the reflective display layer to white to display white in a whole of the subpixels, the portions respectively matching with the second and third subpixels.

**7.** A method of driving the reflective display according to any one of claims 1 to 5, the method comprising:

setting a portion of the reflective display layer to black, the portion matching with the second subpixel; and setting portions of the reflective display layer to white to display the first color in a whole of the subpixels, the portions respectively matching with the first and third subpixels.

**8.** A method of driving the reflective display according to any one of claims 1 to 4, the method comprising:

setting portions of the reflective display layer to black to display black in a whole of the subpixels, the portions respectively matching with the first, second, and third subpixels.

FIG. 1

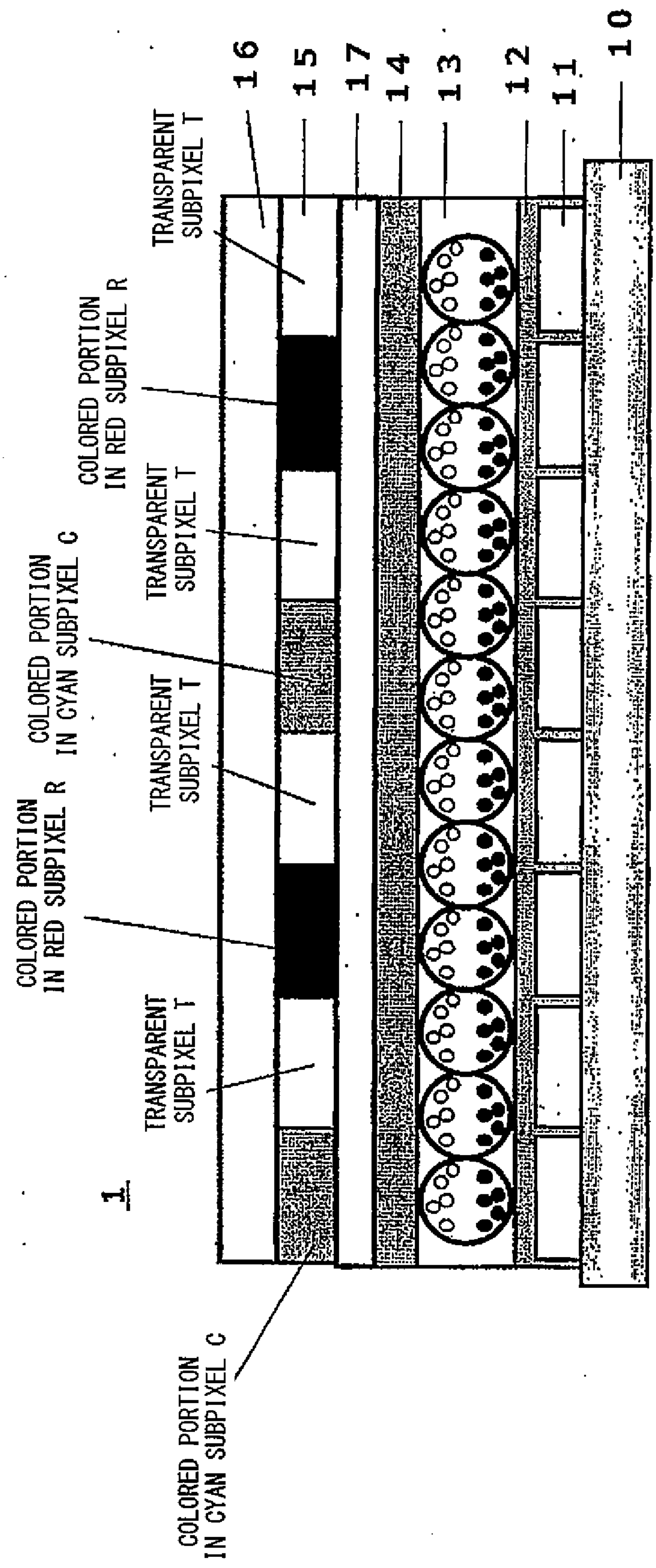
1
10
11
12
13
14
17
15
16
TRANSPARENT SUBPIXEL T
COLORED PORTION IN RED SUBPIXEL R
TRANSPARENT SUBPIXEL T
COLORED PORTION IN CYAN SUBPIXEL C
TRANSPARENT SUBPIXEL T
COLORED PORTION IN RED SUBPIXEL R
TRANSPARENT SUBPIXEL T
COLORED PORTION IN CYAN SUBPIXEL C

FIG. 2A

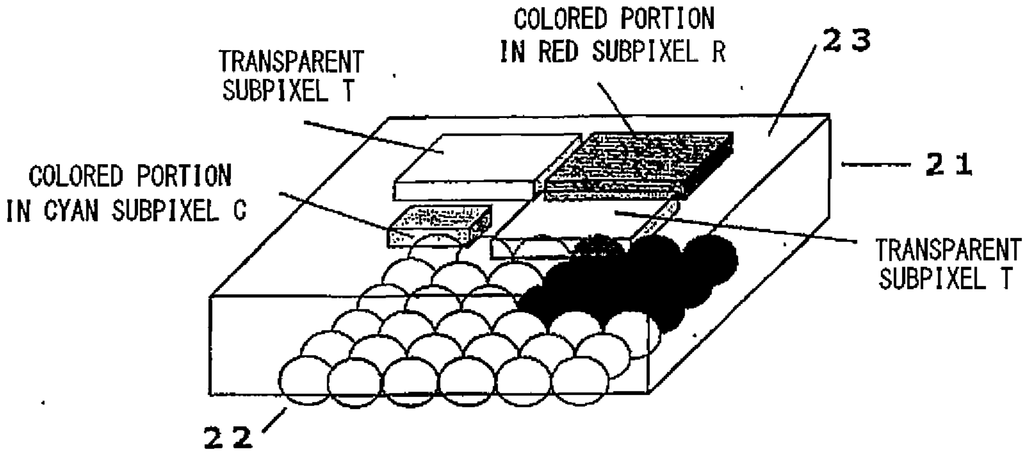


FIG. 2B

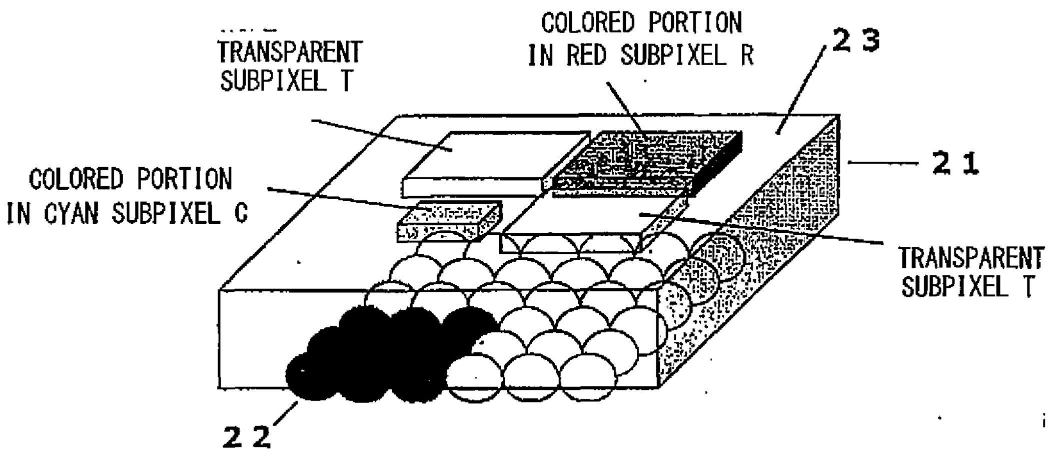


FIG. 2C

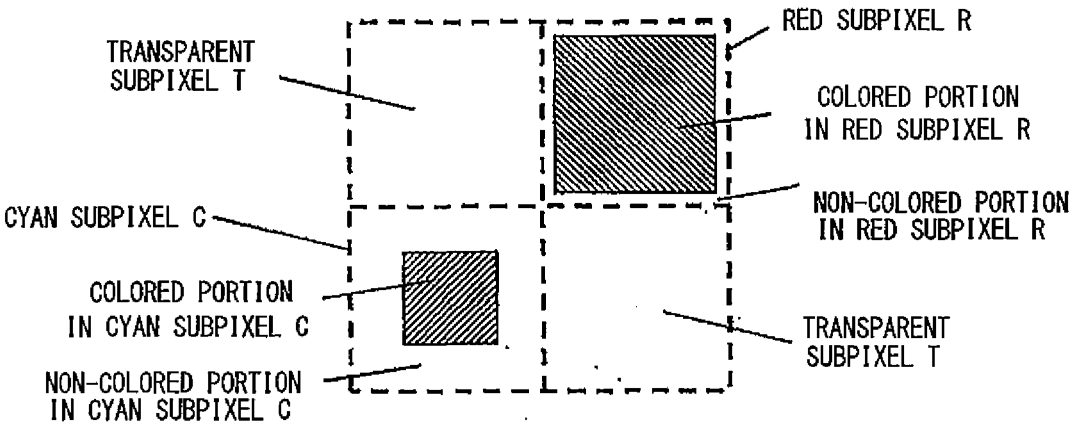

FIG. 3A

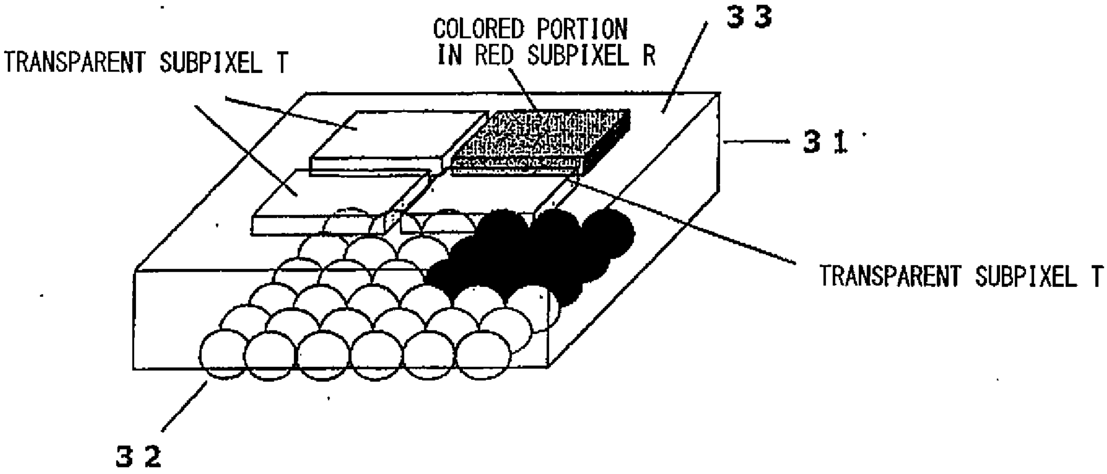
COLORED PORTION
IN RED SUBPIXEL R
33
TRANSPARENT SUBPIXEL T
31
TRANSPARENT SUBPIXEL T
32

FIG. 3B

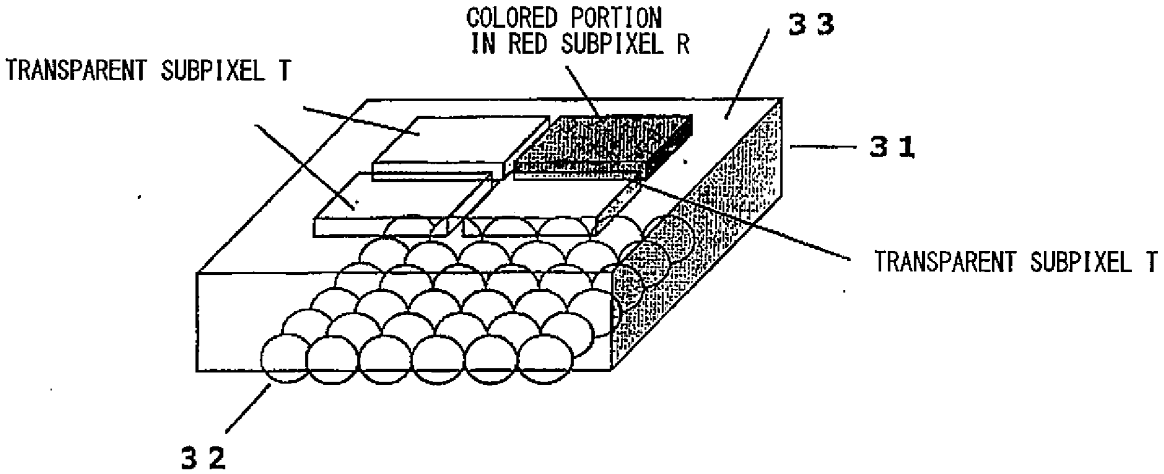
COLORED PORTION
IN RED SUBPIXEL R
33
TRANSPARENT SUBPIXEL T
31
TRANSPARENT SUBPIXEL T
32

FIG. 4A

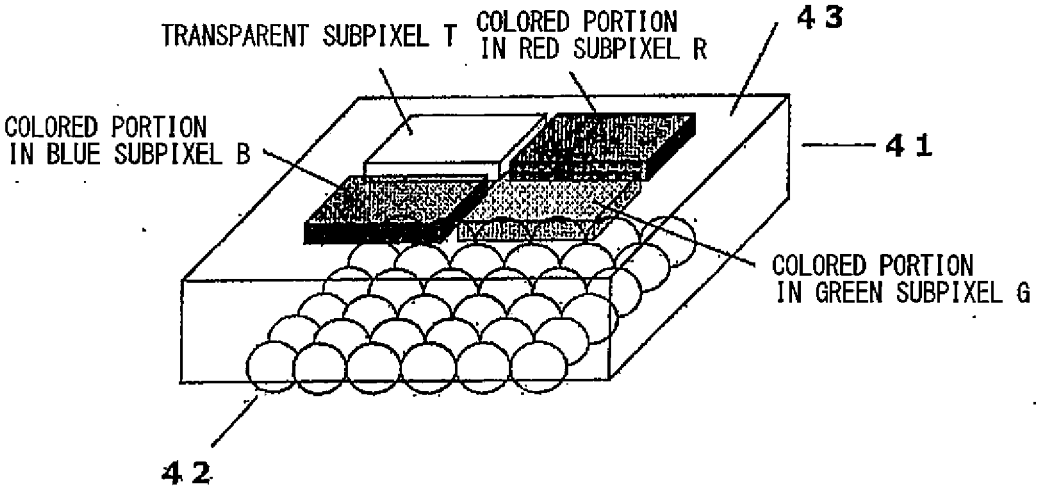
TRANSPARENT SUBPIXEL T
COLORED PORTION IN RED SUBPIXEL R
43
COLORED PORTION IN BLUE SUBPIXEL B
41
COLORED PORTION IN GREEN SUBPIXEL G
42

FIG. 4B

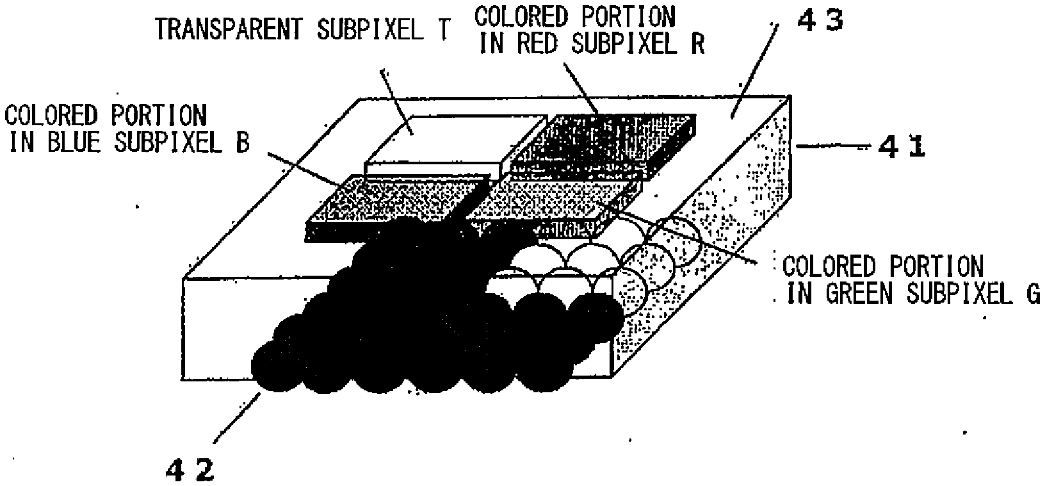
TRANSPARENT SUBPIXEL T
COLORED PORTION IN RED SUBPIXEL R
43
COLORED PORTION IN BLUE SUBPIXEL B
41
COLORED PORTION IN GREEN SUBPIXEL G
42

## INTERNATIONAL SEARCH REPORT

International application No.
PCT/JP2013/005913

A. CLASSIFICATION OF SUBJECT MATTER
*G02F1/167*(2006.01)i

According to International Patent Classification (IPC) or to both national classification and IPC

B. FIELDS SEARCHED

Minimum documentation searched (classification system followed by classification symbols)
G02F1/167

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2012-168242 A (Toppan Printing Co., Ltd.), 06 September 2012 (06.09.2012), paragraphs [0016] to [0059]; fig. 1 to 3 & WO 2012/108431 A1 & TW 201239498 A | 1-6,8<br>7 |
| Y<br>A | "Multi Color Hyoji Taio Denshi Paper Signage no Kaihatsu", [online], 06 June 2012 (06.06.2012), [retrieval date 28 November 2013 (28.11.2013)], Internet <URL: http://www.toppan.co.jp/r_and_d/technical/news1.html> (URL of page showing published date of the document <http://www.toppan.co.jp/r_and_d/technical.html>) | 1-6,8<br>7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 November, 2013 (28.11.13) | 10 December, 2013 (10.12.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/005913

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-128571 A (Seiko Epson Corp.), 19 May 2005 (19.05.2005), paragraphs [0080] to [0092], [0116] to [0119]; fig. 15 to 20, 33 to 35<br>& US 6147728 A & EP 786684 A1<br>& WO 1997/004350 A1 & TW 406205 B<br>& KR 10-0258290 B & CN 1159230 A | 2 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003161964 A